# EUROPEAN PATENT APPLICATION

(11) **EP 0 961 389 A2**
(43) Date of publication of application: **01.12.1999**
(21) Application number: 99109281.8
(22) Date of filing: 27.05.1999
(51) Int. Cl.: H02K 19/10

(54) **Electronically commutated electric machine having a rotor with salient poles**

(30) Priority: 27.05.1998 SI 9800154
(71) Applicant: Zadravec, Jurica, 100 Ljubljana (SL); Gramc, Janez, 8263 Cerklje ob Krki 11 (SL)
(72) Inventor: Zadravec, Jurica, 100 Ljubljana (SL); Gramc, Janez, 8263 Cerklje ob Krki 11 (SL)
(74) Representative: HOFFMANN - EITLE

(57) **Abstract**

Stator field winding (5) is placed at a stator core (1) so that the entire magnetic flux through the lateral side of the rotor (6) due to an operating electric current flowing through stator phase windings (2) is embraced by the stator field winding (5). The stator field winding (5) is composed of at least a first stator field part-winding (5a) which is shunted by a capacitor (C) and connected between an upstream connection terminal (U) of the electric machine and the downstream ends of all stator phase windings (2), each time through a rectifying element (DR, DS, DT) conducting the electric current towards the upstream connection terminal (U) of the electric machine.

At least a part of the magnetic field energy as present in the magnetic circuit before commutation is transformed into the magnetic field energy in the magnetic circuit after commutation has been performed. The electric machine according to the invention operates with wider air gaps between stator and rotor poles; therefore no considerable reactive power is either consumed or generated and, owing to the narrow air gaps, there are no difficulties in its fabrication. Its operating life is long. The electromagnetic compatibility is enhanced.

## Description

The invention concerns an electronically commutated electric machine having a rotor with salient poles and stator phase windings on stator poles, which exploits the energy of a decreasing magnetic field of any phase in the moment of commutation by building up a magnetic field in a magnetic circuit comprising a relevant rotor section, a whole relevant shield and a relevant frame section as well as a relevant stator core section.

On the one hand electric reluctance machines distinguished by a simple rotor construction are known. Rotor salient poles are either provided with field windings or they are made of permanent magnets or even without any excitation. The electric reluctance machine functions equally well if it is excited by a direct or an alternating, a smooth or a pulsating electric current. If it is controlled by electronic control circuits these circuits can be of lower price since a single electronic switch is sufficient for the excitation of each phase. The machine is able to function at a very high rotational speed and therefore a higher specific volume throughput is reached, whereby its manufacturing costs are lowered. However, its efficiency is low because of a high reactive electric current. The electric reluctance machine can be practically used only with narrow air gaps between stator and rotor poles and the feasibility of manufacturing such electric machines is low.

On the other hand, however, commutator electric machines are known, collector electric machines as well electronically commutated electric machines. The efficiency of such electric machine is very high. The machine is able to function at a very high rotational speed and therefore a higher specific volume throughput is reached, whereby its manufacturing costs are lowered. Since it is provided with field windings or with permanent magnets, the widths of air gaps between the stator and the rotor are technologically feasible. It is possible to control such electric machine and to vary its rotational velocity quite simply and at low price. However, the collector is quickly worn away and it represents an obstacle to manufacturing such electric machines for great power and high voltage, The collector gives rise to electromagnetic disturbances and to difficulties with regard to electromagnetic compatibility. When the electronic commutation is used, however, the manufacturing price is strongly increased due to a high number of electronic switches used in a bridge connection or at least in a the half-bridge connection. A large obstacle to the manufacturing of the electronically commutated electric machines for great power is also a high price of efficient permanent magnets to be mounted on the rotor.

The technical problem to be solved by the present invention is to accomplish such a pattern of a magnetic circuit for any phase that at least in one section thereof the magnetic circuit will be the same as with all other phases and that this magnetic circuit section will retain at least a part of the magnetic field energy present therein before the moment of commutation.

This problem is solved by the electronically commutated electric machine having a rotor with salient poles and stator phase windings on stator poles, the electric machine of the invention being characterized in that a stator field winding is placed at a stator core so that the entire magnetic flux through the lateral side of the rotor due to an operating electric current flowing through stator phase windings is embraced by the stator field winding and that the stator field winding is composed of at least a first stator field part-winding which is shunted by a capacitor and connected between the upstream connection terminal of the electric machine and the downstream ends of all stator phase windings, each time through a rectifying element conducting the electric current towards the upstream connection terminal of the electric machine.

The electronically commutated electric machine is according to a further embodiment characterized in that the first stator field part-winding is a high-resistive winding and that magnetic lines created by the stator phase winding radially traverse an air gap between the stator poles and the salient rotor poles and within the rotor they are oriented predominantly along its axis and that the stator field winding is incorporated in the stator coaxially to the rotor axis.

The first embodiment of the electronically commutated electric machine according to the invention is characterized in that the stator field winding is placed laterally at one side of the stator core and of the stator phase windings and, furthermore, also in that at its lateral side, at which the stator field winding is placed, the rotor is provided with a lateral projection through which the rotor has a tight magnetic contact to an electric machine shield.

The second embodiment of the electronically commutated electric machine according to the invention is characterized in that one part of the stator field winding is placed laterally at each side of the stator core and of the stator phase windings. It is also characterized in that through lateral projections the rotor has a tight magnetic contact to electric machine shields.

The third embodiment of the electronically commutated electric machine according to the invention is characterized in that the stator field winding is placed between two stator cores which are mutually displaced along the rotor axis and are provided with common stator phase windings, and that the salient rotor poles under the first stator core are circumferentially displaced for 180 electrical degrees with respect to the salient rotor poles under the second stator core.

All embodiments of the electronically commutated electric machine according to the invention are characterized by one or several following features:
- a second stator field part-winding is placed next to the first stator field part-winding, the former being connected between the upstream connection terminal of the electric machine and the upstream ends of all stator phase windings and shunted through a rectifying element conducting the electric current towards the upstream connection terminal of the electric machine;
- next to the first stator field part-winding a third stator field part-winding is placed, the latter being connected between the upstream connection terminal of the electric machine and the mass of the electric machine connection circuit;
- next to the third stator field part-winding a fourth stator field part-winding is placed; and
- commutation switching elements connected between down stream ends of the stator phase windings and the mass of the electric machine connection circuit are controlled by outputs of magnetic sensors.

The electronically commutated electric machine according to the invention having a rotor with salient poles reveals numerous advantages over known electric machines of this kind. At least a part of the magnetic field energy as present in the magnetic circuit before commutation is transformed into the magnetic field energy in the magnetic circuit after commutation has been performed. The electric machine according to the invention operates with wider air gaps between the stator and the rotor poles; therefore no considerable reactive power is either consumed or generated and in its fabrication there are no difficulties due to narrow air gaps. Its operating life is long. The rotor is provided with salient poles and therefore needs neither windings nor permanent magnets. The electromagnetic compatibility is enhanced.

The solution of the invention will now be disclosed in detail by way of description of three embodiments thereof and with reference to the accompanying drawings representing in
- Figs. 1a, 1b: an axial and a transverse section of a first embodiment of an electronically commutated electric machine according to the invention having a rotor with salient poles,
- Figs. 2a, 2b: an axial and a transverse section of a second embodiment of an electronically commutated electric machine according to the invention having a rotor with salient poles,
- Figs. 3a, 3b, 3c: an axial and a transverse section of a third embodiment of an electronically commutated electric machine according to the invention having a rotor with salient poles, and
- Fig. 4: a circuit layout of an electronically commutated electric machine according to the invention having a rotor with salient poles.

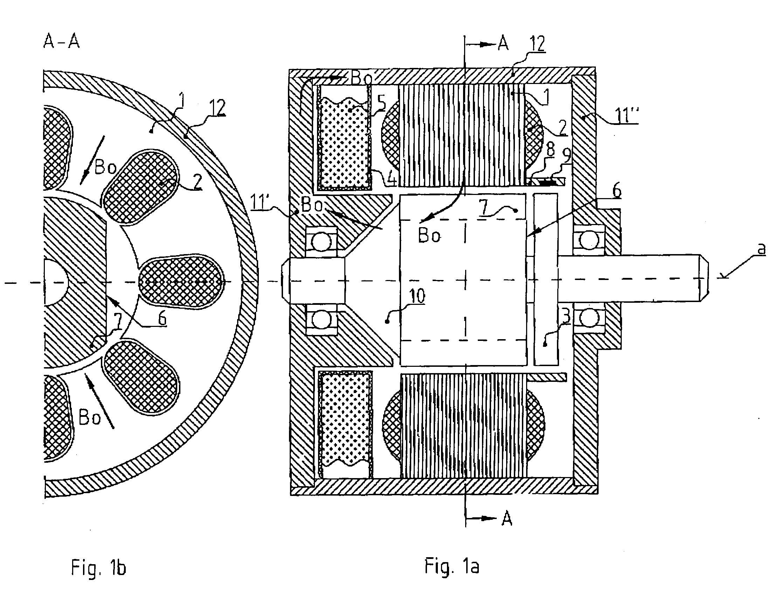

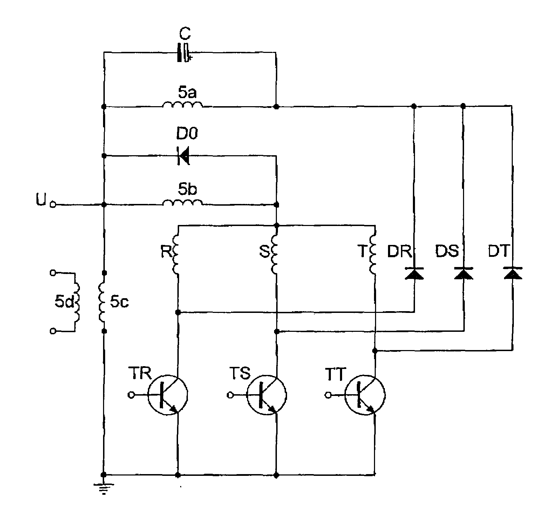

Three embodiments of an electronically commutated electric machine of the invention having a rotor 6 with salient poles 7; 7', 7'' and stator phase windings 2; R, S, T on stator poles are shown in Figs. 1a, 1b, 2a, 2b, 3a, 3b, 3c and in Fig. 4, wherein a circuit layout of the electric machine of the invention is represented. In a winding support 4; 4', 4'' a one-part or a several-part stator field winding 5 and 5', 5'', respectively, is incorporated and placed at a stator core 1 and 1', 1'', respectively, so that the entire magnetic flux represented by magnetic field lines Bo through the lateral side of the rotor 6 and generated by an operating electric current flowing through the stator phase windings is embraced by the stator field winding 5; 5', 5''. Preferably, the stator field winding 5; 5', 5'' is mounted coaxially with respect to the rotor axis a.

The stator field winding 5; 5', 5'' is composed of at least a first stator field part-winding 5a being a high-resistive winding. The stator field part-winding 5a is shunted by a capacitor C, preferably by an electrolytic one, and connected between the upstream connection terminal U of the electric machine and the downstream ends of all stator phase windings 2; R, S, T. Such connection is performed each time through a rectifying element DR, DS and DT, respectively, conducting the electric current towards the upstream connection terminal U of the electric machine.

In all disclosed embodiments of the electronically commutated electric machine of the invention, a second stator field part-winding 5b can be placed next to the first stator field part-winding 5a (Fig. 4). The second stator field part-winding 5b is connected between the upstream connection terminal U of the electric machine and the upstream ends of all stator phase windings 2; R, S, T and it is shunted through a rectifying element D0 conducting the electric current towards the upstream connection terminal U of the electric machine.

Next to the first stator field part-winding 5a, a third stator field part-winding 5c can be placed, which is connected between the upstream connection terminal U of the electric machine and the mass of the electric machine connection circuit. Next to the third stator field part-winding 5c a fourth stator field part-winding 5d can be placed, whereto an appropriate control circuit can be connected (not shown).

Commutation switching elements TR, TS, TT are connected between the downstream ends of the stator phase windings 2; R, S, T and the mass of the electric machine connection circuit. The commutation switching elements are controlled by the outputs of magnetic sensors 9 detecting magnetic field variations due to a permanent magnet 3 or due to the salient rotor poles 7; 7', 7''. For each phase one magnetic sensor 9 is provided, they are mounted on separate adjustably turnable supports 8.

In a known way the electronically commutated electric machine of the invention in all disclosed embodiments is provided with a frame 12 and shields 11', 11'' carrying bearings, the frame 12 has a tight magnetic contact to the shields 11', 11''.

In the first embodiment of the electronically commutated electric machine of the invention the stator field winding 5 made at least of the first stator field part-winding 5a is placed laterally at one side of the stator core 1 and of the stator phase windings 2; R, S, T (Fig. 1a, 1b). The rotor 6 is provided with a lateral projection 10 at its lateral side, at which the stator field winding 5; 5a is placed. Through the lateral projection 10 the rotor 6 has a tight magnetic contact to the electric machine shield 11'.

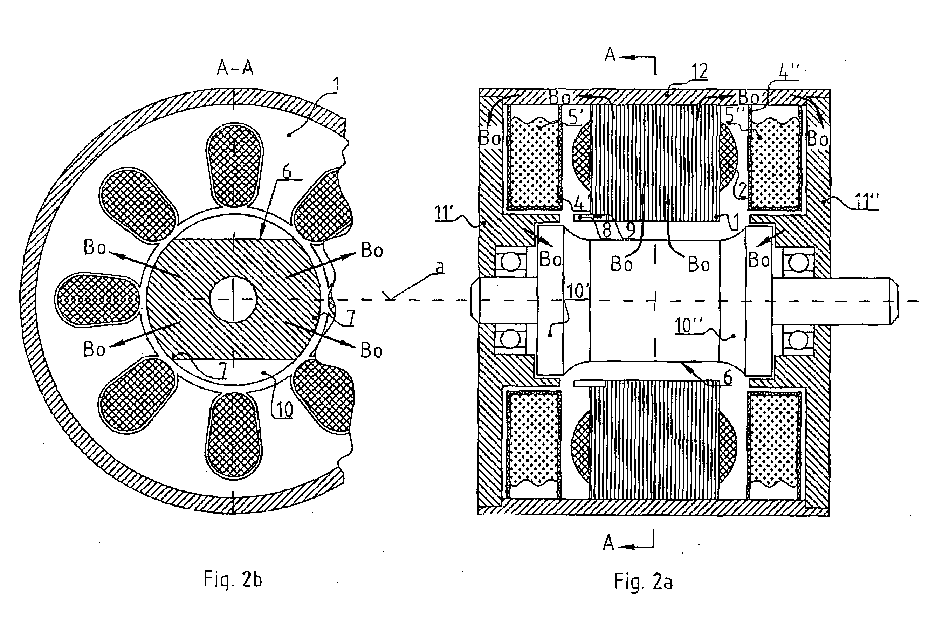

In the second embodiment of the electronically commutated electric machine of the invention one part 5', 5'' of the stator field winding 5', 5''; 5a is placed laterally at each side of the stator core 1 and of the stator phase windings 2; R, S, T (Fig. 2a, 2b). Through lateral projections 10', 10'' the rotor 6 has a tight magnetic contact to the electric machine shields 11', 11''.

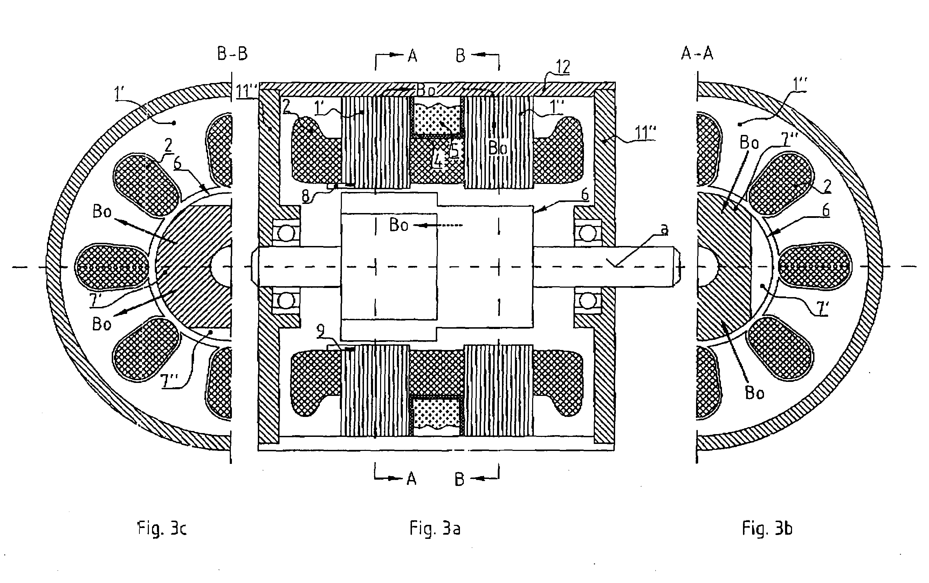

In the third embodiment of the electronically commutated electric machine of the invention the stator field winding 5; 5a is placed between two stator cores 1', 1'', which are mutually displaced along the rotor axis a and are provided with the common stator phase windings 2; R, S, T (Fig. 3a, 3b, 3c). The salient rotor poles 7' under the first stator core 1' are circumferentially displaced for 180 electrical degrees with respect to the salient rotor poles 7'' under the second stator core 1''.

In the following the functioning of the electronically commutated electric motor of the invention is described.

The field lines Bo of the magnetic field generated by the electric current through the stator field winding 5; 5', 5'' as well as the magnetic field lines generated by the operating electric current through the stator phase windings radially traverse the air gaps between the stator poles and the salient rotor poles 7; 7', 7''. The magnetic field lines pass the rotor 6 mainly along its axis a. Thereafter through one or both shields 11 and 11', 11'', respectively, they return into the stator core 1; 1', 1'' provided with stator poles.

If the operating electric current through the stator phase windings is a direct current, then in any point on the axis a of the rotor 6, irrespective of the current phase, the direction of the magnetic field lines is the same all the time. If the stator field part-winding 5c is fed with a direct current and at the same time also the stator field part-windings 5a and 5b are fed with a direct current, then in the same way in any point of the magnetic circuit the direction of the magnetic field generated by these currents is the same, irrespective of the rotation angle of the rotor 6.

Hence the direct current feeding of the electric motor of the invention is preferred since in the rotor 6 the direction of the magnetic field due to the stator phase windings 2; R, S, T coincides with the direction of the magnetic field due to the stator field winding 5; 5', 5''.

In the moment of turning-off the electric current through a particular stator phase winding 2; R, S, T, the magnetic field within the magnetic circuit of this winding starts to decrease. In this winding and partially also in other windings the electic voltage is induced, whereby an electric current is generated. The capacitor C is loaded. The energy of the magnetic field generated by the now interrupted electric current is accumulated in the capacitor C. The capacitor C is discharged through the winding 5a generating a magnetic field in the magnetic circuit already described. A part of this magnetic circuit coincides with the magnetic circuit of the stator phase winding 2; R, S, T for the phase to be turned on in the following moment. In a part of the magnetic circuit after the commutation, especially in the rotor 6, therefore at least a part of the magnetic field energy from the moments before the commutation will be retained just in the magnetic circuit which will be set up after the commutation.

The electric resistance of the stator field winding 5a must be such that the electric current is generated only by induced overvoltage transients twice exceeding the feeding voltage.

The second stator field winding 5b is series-connected to the stator phase windings 2; R, S, T. Electromagnetic disturbances are heavily suppressed by the stator field winding 5b.

The third stator field winding 5c is connected in parallel to the stator phase windings 2; R, S, T like a shunt winding at collector machines.

The fourth stator field winding 5d is provided for a separate excitation for control purposes.

The directions of the electric currents flowing through the stator field windings 5a, 5b, 5c and 5d should be such that magnetic potentials generated thereby are added to each other.

The magnetic field due to the electric current flowing through the stator field winding 5; 5', 5'' is vector-added in any moment and in any point of the magnetic circuit to the magnetic field generated by the operating electric current flowing through the stator phase windings 2; R, S, T. By varying the electric current flowing through the stator field winding 5; 5', 5'', the features of the electric motor of the invention can be influenced considerably.

By the direct current feeding of the electric motor of the invention it is made possible that individual phases can be turned-on and turned off each time by only one electronic switch and no bridge connection or half-bridge connection or any other connection making possible the feeding of the phase windings with an alternating electric current is needed.

The first embodiment of the electric motor of the invention is suitable for starters because of an axial force appearing therein, The second embodiment of the electric motor of the invention is preferably applied where there is enough room in axial direction, since the magnetic flux through both lateral rotor sides is exploited. At the third embodiment of the electric motor of the invention preferably a cascade of several units on a common axis is used, since the unit length is limited by the transversal dimension of the rotor 6.

## Claims

1. Electronically commutated electric machine having a rotor (6) with salient poles (7; 7', 7'') and stator phase windings (2; R, S, T) on stator poles,
characterized in
that a stator field winding (5; 5', 5'') is placed at a stator core (1; 1', 1'') so that the entire magnetic flux through the lateral side of the rotor (6) due to an operating electric current flowing through the stator phase windings (2; R, S, T) is embraced by the stator field winding (5; 5', 5''),
and that the stator field winding (5; 5', 5'') is composed of at least a first stator field part-winding (5a), which is shunted by a capacitor (C) and connected between an upstream connection terminal (U) of the electric machine and the downstream ends of all stator phase windings (2; R, S, T), each time through a rectifying element (DR, DS, DT) conducting the electric current towards the upstream connection terminal (U) of the electric machine.

2. Electronically commutated electric machine as recited in claim 1,
characterized in
that the first stator field part-winding (5a) is a high-resistive winding.

3. Electronically commutated electric machine as recited in claim 2,
characterized in
that magnetic lines (Bo) created by the stator phase winding (5; 5', 5''; 5a) radially traverse an air gap between the stator poles and the salient rotor poles (7; 7', 7'') and, within the rotor (6), are oriented predominantly along its axis (a).

4. Electronically commutated electric machine as recited in claim 2 or 3,
characterized in
that the stator field winding (5; 5', 5''; 5a) is incorporated in the stator coaxially to the rotor axis (a).

5. Electronically commutated electric machine as recited in any claim 1 to 4,
characterized in
that the stator field winding (5; 5a) is placed laterally at one side of the stator core (1) and of the stator phase windings (2; R, S, T).

6. Electronically commutated electric machine as recited in claim 5,
characterized in
that at its lateral side, at which the stator field winding (5; 5a) is placed, the rotor (6) is provided with a lateral projection (10), through which the rotor (6) has a tight magnetic contact to an electric machine shield (11').

7. Electronically commutated electric machine as recited in any claim 1 to 4,
characterized in
that one part (5', 5'') of the stator field winding (5', 5''; 5a) is placed laterally at each side of the stator core (1) and the stator phase windings (2; R, S, T).

8. Electronically commutated electric machine as recited in claim 7,
characterized in
that through lateral projections (10', 10'') the rotor (6) has a tight magnetic contact to electric machine shields (11', 11'').

9. Electronically commutated electric machine as recited in any claim 1 to 4,
characterized in
that the stator field winding (5; 5a) is placed between two stator cores (1', 1''), which are mutually displaced along the rotor axis (a) and are provided with common stator phase windings (2; R, S, T),
and that the salient rotor poles (7') under the first stator core (1') are circumferentially displaced for 180 electrical degrees with respect to the salient rotor poles (7'') under the second stator core (1'').

10. Electronically commutated electric machine as recited in any previous claim,
characterized in
that a second stator field part-winding (5b) is placed next to the first stator field part-winding (5a), the former being connected between the upstream connection terminal (U) of the electric machine and the upstream ends of all stator phase windings (2; R, S, T) and shunted through a rectifying element (D0) conducting the electric current towards the upstream connection terminal (U) of the electric machine.

11. Electronically commutated electric machine as recited in any previous claim,
characterized in
that next to the first stator field part-winding (5a) a third stator field part-winding (5c) is placed, the latter being connected between the upstream connection terminal (U) of the electric machine and the mass of the electric machine connection circuit.

12. Electronically commutated electric machine as recited in any previous claim,
characterized in
that next to the third stator field part-winding (5c) a fourth stator field part-winding (5d) is placed.

13. Electronically commutated electric machine as recited in any previous claim,
characterized in
that commutation switching elements (TR, TS, TT) connected between the down stream ends of the stator phase windings (2; R, S, T) and the mass of the electric machine connection circuit are controlled by outputs of the magnetic sensors (9).
